# EUROPÄISCHE PATENTSCHRIFT

(11) **EP 3 850 520 B1**
(45) Veröffentlichungstag und Bekanntmachung des Hinweises auf die Patenterteilung: **28.09.2022**
(21) Anmeldenummer: 19765643.2
(22) Anmeldetag: 14.08.2019
(51) Int. Cl.: G06F 21/62, F02C 9/00

(54) **SCHNITTSTELLENANORDNUNG FÜR EINEN TRIEBWERKSREGLER**
INTERFACE ASSEMBLY FOR A PROPULSION UNIT CONTROLLER
ENSEMBLE D'INTERFACES POUR UN RÉGULATEUR DE PROPULSEUR

(30) Priorität: 10.09.2018 DE 102018215361
(43) Veröffentlichungstag der Anmeldung: 21.07.2021
(73) Patentinhaber: MTU Aero Engines AG, 80995 München (DE)
(72) Erfinder: KETTL, Christian, 82256 Fürstenfeldbruck (DE); RIETSCHEL, Lutz, 85614 Kirchsseeon (DE)
(86) Internationale Anmeldenummer: PCT/DE2019/000220
(87) Internationale Veröffentlichungsnummer: WO 2020/052698

(56) Entgegenhaltungen:
- DE-A1-102005 031 629
- US-A1- 2013 111 169
- US-A1- 2016 252 019

## Beschreibung

Die vorliegende Erfindung betrifft eine Schnittstellenanordnung für einen Triebwerksregler eines Triebwerks, insbesondere eines Flugzeug- und/oder Gasturbinentriebwerks, eine Triebwerksregleranordnung bzw. ein Triebwerk mit der Schnittstellenanordnung und ein Verfahren zur Kommunikation zwischen einem Triebwerksregler und einer Eingabeeinrichtung über die Schnittstellenanordnung. Triebwerksregler weisen in der Regel Speicher auf, in denen Reglergrößen gespeichert werden.

Sowohl bei der Erstherstellung als auch der Instandhaltung können Eingabeeinrichtungen mit dem Triebwerksregler kommunizieren, insbesondere um solche gespeicherten Reglergrößen auszulesen und/oder zu verändern.

Insbesondere, wenn die Eingabeeinrichtung nicht denselben Sicherheitsstandards wie der Triebwerksregler entspricht, können dessen Speicher durch diese Kommunikation irrtümlich oder vorsätzlich manipuliert bzw. (Werte gespeicherter) Reglergrößen verändert werden.

Die US 2013/0111169 A1 schlägt einen Regler für eine Brennkraftmaschine eines Kraftfahrzeugs vor, der Speicherbereiche aufweist, die in einer ersten Operation von Regler- oder Fahrzeughersteller definierbar und in einer zweiten Operation schreibgeschützt werden können, um sogenanntes Chiptuning zu verhindern. US 2016 0 252 019 A und DE 10 2005 031 629 A beschreiben weitere Schnittstellenanordnungen.

Eine Aufgabe einer Ausführung der vorliegenden Erfindung ist es, einen Triebwerksregler, insbesondere dessen Betrieb und/oder eine Kommunikation mit dem Triebwerksregler, zu verbessern.

Diese Aufgabe wird durch eine Schnittstellenanordnung mit den Merkmalen des Anspruchs 1 bzw. ein Verfahren mit den Merkmalen des Anspruchs 10 gelöst. Ansprüche 7, 8 stellen eine Triebwerksregleranordnung bzw. ein Triebwerk mit einer hier beschriebenen Schnittstellenanordnung unter Schutz. Vorteilhafte Ausführungsformen der Erfindung sind Gegenstand der Unteransprüche.

Nach einer Ausführung der vorliegenden Erfindung weist ein Triebwerksregler für ein bzw. eines Triebwerk(s), in einer Ausführung ein(es) Flugzeug- und/oder Gasturbinentriebwerk(s), einen Speicher auf, in dem eine oder mehrere (jeweils) ein- oder mehrdimensionale Reglergrößen, insbesondere veränderlich und/oder nicht-flüchtig, gespeichert sind bzw. werden bzw. der hierzu vorgesehen, insbesondere eingerichtet, ist bzw. verwendet wird.

Der Triebwerksregler regelt in einer Ausführung einen Betrieb des Triebwerks, in einer Ausführung auf Basis der gespeicherten Reglergröße(n) und/oder ermittelter Ist-Größen, insbesondere Zustandsgrößen wie beispielsweise Temperaturen, Drücken, Volumenströmen, Last-, insbesondere Schubdaten, Schaufel- und/oder Ventilstellungen oder dergleichen, bzw. ist hierzu vorgesehen, insbesondere eingerichtet, bzw. wird hierzu verwendet.

Die Reglergröße kann in einer Ausführung einen oder mehrere ein- oder mehrdimensionale Steuer- bzw. Regelparameter, insbesondere Grenz- und/oder Sollwerte, Modellparameter, Regelkoeffizienten oder dergleichen, aufweisen. In einer Ausführung wird bzw. ist die Reglergröße bzw. deren Wert, in einer Ausführung variabel, vorgebbar bzw. vorgegeben bzw., insbesondere durch Bedienpersonal und/oder offline bzw. vor einem Betrieb des Triebwerksreglers, einstellbar bzw. eingestellt. Gleichermaßen kann die Reglergröße bzw. deren Wert auch, insbesondere sensorisch, erfasst (worden) sein bzw. werden, insbesondere online bzw. während eines Betriebs des Triebwerksreglers.

Nach einer Ausführung der vorliegenden Erfindung weist eine Schnittstellenanordnung, insbesondere ein Adapter, für den Triebwerksregler eine Schnittstelle, über die die Schnittstellenanordnung bzw. der Adapter, insbesondere temporär, mit einer Eingabeeinrichtung signalverbunden werden und/oder kommunizieren kann bzw. die hierzu vorgesehen, insbesondere eingerichtet, ist bzw. verwendet wird, und die vorliegend ohne Beschränkung der Allgemeinheit als erste Schnittstelle bezeichnet wird, und eine weitere Schnittstelle auf, über die die Schnittstellenanordnung bzw. der Adapter, insbesondere stationär, mit dem Triebwerksregler signalverbunden werden und/oder kommunizieren kann, insbesondere signalverbunden ist, bzw. die hierzu vorgesehen, insbesondere eingerichtet, ist bzw. verwendet wird, und die vorliegend ohne Beschränkung der Allgemeinheit als zweite Schnittstelle bezeichnet wird. Die erste und zweite Schnittstelle kommunizieren in einer Ausführung, insbesondere über eine (schnittstellenanordnungs- bzw. adapter)interne Kommunikation, miteinander bzw. sind hierzu vorgesehen, insbesondere eingerichtet, bzw. werden hierzu verwendet.

Die Eingabeeinrichtung weist in einer Ausführung einen Computer, insbesondere einen PC, einen Laptop, ein Tablet oder dergleichen, auf und/oder ist zur, insbesondere manuellen und/oder akustischen, Eingabe, insbesondere von Daten, durch Bedienpersonal vorgesehen, insbesondere eingerichtet, bzw. wird hierzu verwendet.

In einer Ausführung kommuniziert die erste Schnittstelle über ein Netzwerk und/oder drahtlos, in einer Ausführung per Funk, Infrarot oder dergleichen, oder leitungsgebunden mit der Eingabeeinrichtung bzw. wird bzw. ist hierzu mit dieser signalverbunden bzw. hierzu vorgesehen, insbesondere eingerichtet, bzw. wird hierzu verwendet. In einer Weiterbildung ist die erste Schnittstelle eine Ethernet-Schnittstelle.

Hierdurch kann in einer Ausführung die Eingabeeinrichtung vorteilhaft bedient werden, in einer Ausführung auch vom Triebwerksregler beabstandet bzw. entfernt. Somit können in einer Ausführung auch größere Entfernungen zwischen Triebwerk(sregler) und Eingabeeinrichtung überbrückt werden. Zusätzlich oder alternativ können in einer Ausführung durch die erste Schnittstelle verschiedene (Kommunikations)Protokolle unterstützt und somit vorteilhaft verschiedenartige Eingabeeinrichtungen verwendet werden bzw. die erste Schnittstelle hierzu vorgesehen, insbesondere eingerichtet, sein bzw. verwendet werden. In einer Ausführung ist die erste Schnittstelle zur Protokollumwandlung vorgesehen, insbesondere eingerichtet, bzw. wird hierzu verwendet.

Die Schnittstellenanordnung, insbesondere die zweite Schnittstelle, weist einen Integritäts-Betriebsmodus auf, in dem eine Veränderung, insbesondere Möglichkeit einer Veränderung, der Reglergröße mithilfe der über die Schnittstellenanordnung mit dem Triebwerksregler kommunizierenden Eingabeeinrichtung eingeschränkt, insbesondere unterbunden wird bzw. ist bzw. der hierzu eingerichtet ist. Somit wird bzw. ist in einer Ausführung eine (Möglichkeit einer) Veränderung der Regelgröße mithilfe der Eingabeeinrichtung bei Kommunikation der Eingabeeinrichtung mit dem Triebwerksregler über die Schnittstellenanordnung in deren Integritäts-Betriebsmodus eingeschränkt, insbesondere gegenüber einem anderen Betriebsmodus der Schnittstellenanordnung und/oder gegenüber einer Kommunikation der und/oder einer anderen Eingabeeinrichtung mit dem Triebwerksregler ohne die Schnittstellenanordnung. In einer Ausführung ist in dem Integritäts-Betriebsmodus die Reglergröße bzw. der Bereich des Speichers, in dem diese abgespeichert ist, schreibgeschützt. Zusätzlich oder alternativ ist bzw. wird in einer Ausführung in dem Integritäts-Betriebsmodus ein Schreibzugriff der Eingabeeinrichtung beschränkt, insbesondere unterbunden.

Somit kann in einer Ausführung vorteilhaft durch die Schnittstellenanordnung in ihrem Integritäts-Betriebsmodus die Wahrscheinlichkeit einer irrtümlichen oder vorsätzlichen Manipulation bzw. Veränderung von (Werten von) gespeicherten Reglergrößen auch ohne entsprechende Sicherheitsmaßnahmen an der Eingabeeinrichtung reduziert und dadurch die Funktion, insbesondere Sicherheit, des Triebwerks(reglers) verbessert werden.

Die Schnittstellenanordnung, insbesondere die zweite Schnittstelle, weist einen Manipulations-Betriebsmodus auf, in dem eine Veränderung der Reglergröße mithilfe der über die Schnittstellenanordnung mit dem Triebwerksregler kommunizierenden Eingabeeinrichtung weniger eingeschränkt ist bzw. wird als in dem Integritäts-Betriebsmodus, insbesondere nicht unterbunden ist bzw. wird. In einer Ausführung ist der Integritäts-Betriebsmodus ein Default-Betriebsmodus, den die Schnittstellenanordnung bzw. zweite Schnittstelle in einer Ausführung jedenfalls beim Verbinden mit der Eingabeeinrichtung automatisch aufweist.

Hierdurch kann in einer Ausführung einerseits die Reglergröße vor einer irrtümlichen oder vorsätzlichen Manipulation bzw. Veränderung geschützt und trotzdem bei Bedarf geändert werden. Dadurch kann in einer Ausführung die Funktion des Triebwerk(sregler)s (weiter) verbessert werden.

Die Schnittstellenanordnung, insbesondere die zweite Schnittstelle, wird auf Basis eines, in einer Ausführung diskreten, Umschaltsignals, insbesondere von einem von der Eingabeeinrichtung separaten Umschaltsystem, von dem Integritäts-Betriebsmodus in den Manipulations-Betriebsmodus und/oder von dem Manipulations-Betriebsmodus in den Integritäts-Betriebsmodus umgeschaltet bzw. ist/sind die Schnittstellenanordnung und/oder das Umschaltsystem hierzu vorgesehen, insbesondere eingerichtet, bzw. wird/werden hierzu verwendet. In einer Ausführung erfolgt das Umschaltsignal auf Basis einer Bedienereingabe, insbesondere am Umschaltsystem.

Dadurch kann Bedienpersonal in einer Ausführung gezielt und/oder sicher Veränderungen der Reglergröße freigeben bzw. zulassen und/oder abblocken bzw. unterbinden. Hierdurch kann in einer Ausführung die Funktion, insbesondere Sicherheit, des Triebwerk(sregler)s (weiter) verbessert werden.

In einer Ausführung wird in dem Integritäts-Betriebsmodus und/oder Manipulations-Betriebsmodus wenigstens eine, insbesondere die, in dem Speicher gespeicherte Reglergröße über die Schnittstellenanordnung an die Eingabeeinrichtung übermittelt, in einer Ausführung von der Eingabeeinrichtung ausgegeben und/oder weiterverarbeitet, bzw. ist/sind der Integritäts- bzw. Manipulations-Betriebsmodus hierzu eingerichtet. Somit ist in einer Ausführung ein Lesezugriff auf diese Reglergröße sowohl im Integritäts-Betriebsmodus als auch im Manipulations-Betriebsmodus erlaubt, ein Schreibzugriff hingegen nur im Manipulations-Betriebsmodus. Die Eingabeeinrichtung kann entsprechend in einer Ausführung eine Ein- und Ausgabeeinrichtung (eingerichtet bzw. verwendet) zur Eingabe von Daten für den Triebwerksregler und/oder Ausgabe, insbesondere zur Weiterverarbeitung, von Daten von dem Triebwerksregler sein.

Dadurch kann in einer Ausführung ein Test und/oder eine Instandhaltung, insbesondere Wartung, des Triebwerks(reglers) verbessert werden.

In einer Ausführung sind die erste und zweite Schnittstelle in einem (gemeinsamen) Bauteil angeordnet, das in einer Ausführung für den Betrieb des Triebwerks, insbesondere einen Test- und/oder Flugbetrieb, eingerichtet ist.

Hierdurch kann in einer Ausführung die Handhabung und/oder (De)Installation der Schnittstellenanordnung verbessert werden.

In einer Ausführung ist die Schnittstellenanordnung, insbesondere das vorstehend genannte gemeinsame Bauteil, stationär bzw. dauerhaft an dem Triebwerk angeordnet bzw. hierzu vorgesehen, insbesondere eingerichtet, bzw. wird hierzu verwendet.

Hierdurch kann in einer Ausführung ein Testen und/oder Instandhalten an verschiedenen Standorten des Triebwerks verbessert werden.

Nach einer Ausführung der vorliegenden Erfindung wird zur Kommunikation zwischen dem Triebwerksregler und einer Eingabeeinrichtung über eine hier beschriebene Schnittstellenanordnung deren erste Schnittstelle, in einer Ausführung temporär und/oder über ein Netzwerk und/oder drahtlos oder leitungsgebunden, zur Kommunikation mit der Eingabeeinrichtung signalverbunden und der Wert wenigstens einer, insbesondere der, in dem Speicher gespeicherten Reglergröße über die Schnittstellenanordnung übermittelt, insbesondere von dem Triebwerksregler an die Eingabeeinrichtung und/oder von der Eingabeeinrichtung an den Trieb werksregler.

Die Kommunikation zwischen dem Triebwerksregler und der Eingabeeinrichtung erfolgt in einer Ausführung bei der Erstherstellung, einem Test und/oder einer Instandsetzung des Triebwerksreglers bzw. Triebwerks, insbesondere auf einem Triebwerksprüfstand und/oder, insbesondere in situ, am Flugzeug. Dies stellt besonders bevorzugte Verwendungen der vorliegenden Erfindung dar, da hier die genannten Vorteile besonders zum Tragen kommen.

Eine Schnittstelle im Sinne der vorliegenden Erfindung kann hard- und/oder softwaretechnisch ausgebildet sein, insbesondere eine, vorzugsweise digitale, Verarbeitungs-, insbesondere Mikroprozessor-, insbesondere -controllereinheit, insbesondere wenigstens eine CPU, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Der Speicher kann ein oder mehrere, insbesondere verschiedene, Speichermedien, insbesondere optische, magnetische, Festkörper- und/oder andere nicht-flüchtige Medien aufweisen.

In einer Ausführung ist die erste und/oder zweite Schnittstelle echtzeitfähig. Hierdurch kann in einer Ausführung vorteilhaft der Triebwerksregler an einem Triebwerksprüfstand verstellt werden.

Zusätzlich oder alternativ weist die zweite Schnittstelle in einer Ausführung wenigstens eine (weitere) sicherheitskritische Funktion auf und/oder ist gemäß Flugzeug-Regularien qualifiziert, insbesondere geprüft, klassifiziert und/oder freigegeben.

Zusätzlich oder alternativ weist die erste Schnittstelle in einer Ausführung keine sicherheitskritische Funktion auf und/oder ist nicht gemäß Flugzeug-Regularien qualifiziert, insbesondere geprüft, klassifiziert und/oder freigegeben.

Zusätzlich oder alternativ sind in einer Ausführung die erste und zweite Schnittstelle als eigenständige, insbesondere unabhängige, Module ausgebildet.

Hierdurch können in einer Ausführung jeweils, insbesondere in Kombination, die Integrität des Triebwerksreglers erhöht, insbesondere sichergestellt, und/oder Kosten reduziert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Flugzeug mit einem Triebwerk mit einer Schnittstellenanordnung nach einer Ausführung der vorliegenden Erfindung; und
- Fig. 2: ein Verfahren zur Kommunikation zwischen einem Triebwerksregler und einer Eingabeeinrichtung über die Schnittstellenanordnung nach einer Ausführung der vorliegenden Erfindung.

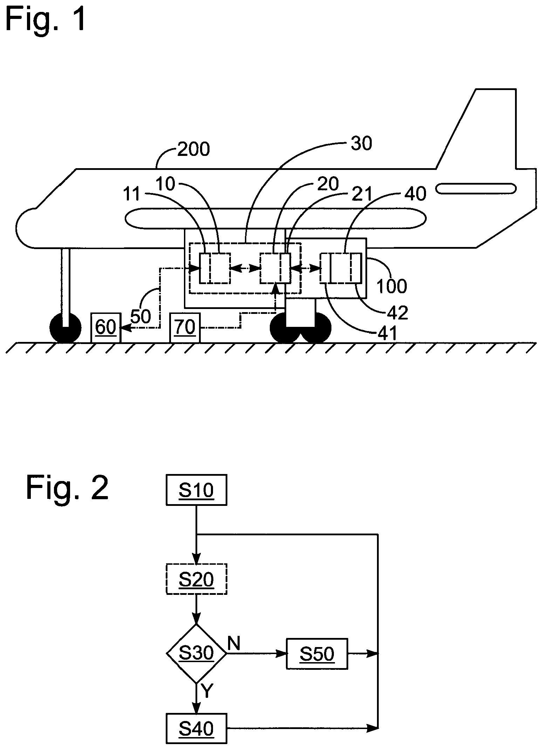

Fig. 1 zeigt ein Flugzeug 200 mit einem Triebwerk 100 mit einer Schnittstellenanordnung 30 nach einer Ausführung der vorliegenden Erfindung.

Die Schnittstellenanordnung 30 weist eine erste Schnittstelle 11 mit einem ersten Mikrocontroller 10 und entsprechender Software und eine zweite Schnittstelle 21 mit einem zweiten Mikrocontroller 20 und entsprechender Software auf. Die beiden Mikrocontroller 10, 20 sind in einem gemeinsamen Bauteil 30 angeordnet und kommunizieren intern miteinander.

Die zweite Schnittstelle 21 ist stationär mit einer Gegenschnittstelle 41 eines Triebwerksreglers 40 des Triebwerks 100 signalverbunden, der einen Speicher 42 aufweist, in dem Reglerparameter des Reglers 40 veränderlich abgespeichert sind.

Die erste Schnittstelle 11 wird in einem Schritt S10 (vgl. Fig. 2) über Ethernet 50 temporär mit einer Eingabeeinrichtung 60 in Form eines PCs, Laptops oder dergleichen signalverbunden.

In einem Schritt S30 wird geprüft, ob der zweite Mikrocontroller 20 infolge einer Bedienereingabe S20 ein diskretes Umschaltsignal von einem temporär angeschlossenen Umschaltsystem 70 erhalten hat.

Ist dies der Fall (S30: "Y"), wird die Schnittstellenanordnung bzw. deren zweite Schnittstelle 21 in einen Manipulations-Betriebsmodus S40 umgeschaltet, in dem die in dem Speicher 42 abgespeicherten Reglerparameter des Reglers 40 mithilfe der Eingabeeinrichtung 60 verändert werden können, insbesondere ein Lese- und Schreibzugriff auf diese zugelassen wird.

Solange der zweite Mikrocontroller 20 das Umschaltsignal nicht erhalten hat (S30: "N"), bleibt die Schnittstellenanordnung bzw. deren zweite Schnittstelle 21 in einen Integritäts-Betriebsmodus S50, in dem die in dem Speicher 42 abgespeicherten Reglerparameter des Reglers 40 durch die Eingabeeinrichtung 60 nicht verändert werden können, insbesondere nur ein Lesezugriff auf diese zugelassen und ein Schreibzugriff auf diese abgeblockt bzw. unterdrückt wird.

Obwohl in der vorhergehenden Beschreibung exemplarische Ausführungen erläutert wurden, sei darauf hingewiesen, dass eine Vielzahl von Abwandlungen möglich ist. So kann die Erfindung insbesondere auch an Triebwerksprüfständen verwendet werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: erster Mikorcontroller
- 11: erste Schnittstelle
- 20: zweiter Mikorcontroller
- 21: zweite Schnittstelle
- 30: Schnittstellenanordnung/Bauteil
- 40: Triebwerksregler
- 41: Gegenschnittstelle
- 42: Speicher
- 50: Ethernet
- 60: Eingabeeinrichtung
- 70: Umschaltsystem
- 100: Triebwerk
- 200: Flugzeug

## Patentansprüche

1. Schnittstellenanordnung (30) für einen Triebwerksregler (40) eines Triebwerks (100), insbesondere eines Flugzeug- und/oder Gasturbinentriebwerks, der einen Speicher (42) zum Speichern wenigstens einer Reglergröße aufweist, wobei die Schnittstellenanordnung eine erste Schnittstelle (11) zur Kommunikation mit einer Eingabeeinrichtung (60) und eine zweite Schnittstelle (21) zur Kommunikation mit dem Triebwerksregler aufweist, **dadurch gekennzeichnet, dass** die Schnittstellenanordnung einen Integritäts-Betriebsmodus (S40) aufweist, in dem eine Veränderung dieser Reglergröße mithilfe der über die Schnittstellenanordnung mit dem Triebwerksregler kommunizierenden Eingabeeinrichtung eingeschränkt ist, und
die Schnittstellenanordnung einen Manipulations-Betriebsmodus (S50) aufweist, in dem eine Veränderung der Reglergröße mithilfe der über die Schnittstellenanordnung mit dem Triebwerksregler kommunizierenden Eingabeeinrichtung weniger eingeschränkt ist als in dem Integritäts-Betriebsmodus, wobei die Schnittstellenanordnung auf Basis eines Umschaltsignals, insbesondere von einem von der Eingabeeinrichtung separaten Umschaltsystem (70), von dem Integritäts-Betriebsmodus in den Manipulations-Betriebsmodus und/oder von dem Manipulations-Betriebsmodus in den Integritäts-Betriebsmodus umschaltbar ist.

2. Schnittstellenanordnung nach Anspruch 1, **dadurch gekennzeichnet, dass** in dem Integritäts-Betriebsmodus und/oder Manipulations-Betriebsmodus wenigstens eine, insbesondere die, in dem Speicher gespeicherte Reglergröße über die Schnittstellenanordnung an die Eingabeeinrichtung übermittelbar, insbesondere von der Eingabeeinrichtung ausgeb- und/oder weiterverarbeitbar ist.

3. Schnittstellenanordnung nach einem der vorhergehenden Ansprüche, **dadurch gekennzeichnet, dass** die erste und zweite Schnittstelle in einem Bauteil angeordnet (30) und/oder als eigenständige Module und/oder echtzeitfähig ausgebildet sind.

4. Schnittstellenanordnung nach einem der vorhergehenden Ansprüche, **dadurch gekennzeichnet, dass** die zweite Schnittstelle wenigstens eine sicherheitskritische Funktion aufweist und/oder gemäß Flugzeug-Regularien qualifiziert ist und/oder die erste Schnittstelle keine sicherheitskritische Funktion aufweist und/oder nicht gemäß Flugzeug-Regularien qualifiziert ist.

5. Triebwerksregleranordnung mit einem Triebwerksregler (40) für ein Triebwerk (100), insbesondere ein Flugzeug- und/oder Gasturbinentriebwerk, und einer Schnittstellenanordnung (30) nach einem der vorhergehenden Ansprüche, deren zweite Schnittstelle (21) zur Kommunikation mit dem Triebwerksregler signalverbunden ist.

6. Triebwerk (100), insbesondere Flugzeug- und/oder Gasturbinentriebwerk, mit einer Triebwerksregleranordnung nach dem vorhergehenden Anspruch zum Regeln des Triebwerks.

7. Triebwerk nach dem vorhergehenden Anspruch, **dadurch gekennzeichnet, dass** die Schnittstellenanordnung stationär an dem Triebwerk angeordnet ist.

8. Verfahren zur Kommunikation zwischen dem Triebwerksregler (40) und einer Eingabeeinrichtung (60) über eine Schnittstellenanordnung (30) nach einem der vorhergehenden Ansprüche, wobei die erste Schnittstelle (11) zur Kommunikation mit der Eingabeeinrichtung (60) signalverbunden und der Wert wenigstens einer, insbesondere der, in dem Speicher gespeicherten Reglergröße über die Schnittstellenanordnung übermittelt wird.

## Claims

1. Interface assembly (30) for an engine controller (40) of an engine (100), in particular an aircraft engine and/or gas turbine engine, which has a memory (42) for storing at least one controller variable, the interface assembly having a first interface (11) for communication with an input device (60) and a second interface (21) for communication with the engine controller, **characterized in that**
the interface assembly has an integrity operating mode (S40) in which a change of this controller variable by means of the input device, which communicates with the engine controller via the interface assembly, is restricted, and
the interface assembly has a manipulation operating mode (S50) in which a change of the controller variable by means of the input device, which communicates with the engine controller via the interface assembly, is less restricted than in the integrity operating mode, the interface assembly being switchable from the integrity operating mode to the manipulation operating mode and/or from the manipulation operating mode to the integrity operating mode based on a switching signal, in particular from a switching system (70) which is separate from the input device.

2. Interface assembly according to claim 1, **characterized in that,** in the integrity operating mode and/or the manipulation operating mode, at least one controller variable, in particular the controller variable, which is stored in the memory can be transmitted via the interface assembly to the input device, in particular can be output and/or further processed by the input device.

3. Interface assembly according to either of the preceding claims, **characterized in that** the first and the second interface are arranged in a component (30) and/or are designed as independent modules and/or are real-time capable.

4. Interface assembly according to any of the preceding claims, **characterized in that** the second interface has at least one safety-critical function and/or is qualified according to aircraft regulations and/or the first interface has no safety-critical function and/or is not qualified according to aircraft regulations.

5. Engine controller assembly comprising an engine controller (40) for an engine (100), in particular an aircraft engine and/or gas turbine engine, and an interface assembly (30) according to any of the preceding claims, the second interface (21) of which is signal-connected to the engine controller for communication.

6. Engine (100), in particular an aircraft engine and/or gas turbine engine, comprising an engine controller assembly according to the preceding claim for controlling the engine.

7. Engine according to the preceding claim, **characterized in that** the interface assembly is arranged on the engine in a stationary manner.

8. Method for communication between the engine controller (40) and an input device (60) via an interface assembly (30) according to any of the preceding claims, wherein the first interface (11) is signal-connected to the input device (60) for communication and the value of at least one controller variable, in particular the controller variable, which is stored in the memory is transmitted via the interface assembly.

## Revendications

1. Agencement d'interfaces (30) pour régulateur de propulseur (40) d'un propulseur (100), en particulier d'un propulseur d'aéronef et/ou d'un propulseur de turbine à gaz, lequel présente une mémoire (42) permettant de stocker au moins une variable de régulateur, l'agencement d'interfaces présentant une première interface (11) permettant la communication avec un dispositif d'entrée (60) et une seconde interface (21) permettant la communication avec le régulateur de propulseur, **caractérisé en ce que**
l'agencement d'interfaces présente un mode de fonctionnement d'intégrité (S40) dans lequel une modification de ladite variable de régulateur est limitée à l'aide du dispositif d'entrée communiquant avec le régulateur de propulseur par l'intermédiaire de l'agencement d'interfaces, et
l'agencement d'interfaces présente un mode de fonctionnement de manipulation (S50) dans lequel une modification de la variable de régulateur est moins limitée à l'aide du dispositif d'entrée communiquant avec le régulateur de propulseur par l'intermédiaire de l'agencement d'interfaces que dans le mode de fonctionnement d'intégrité, l'agencement d'interfaces pouvant être commuté, sur la base d'un signal de commutation, en particulier à partir d'un système de commutation (70) séparé du dispositif d'entrée, du mode de fonctionnement d'intégrité au mode de fonctionnement de manipulation et/ou du mode de fonctionnement de manipulation au mode de fonctionnement d'intégrité.

2. Agencement d'interfaces selon la revendication 1, **caractérisé en ce que** dans le mode de fonctionnement d'intégrité et/ou le mode de fonctionnement de manipulation, au moins une variable de régulateur, en particulier la variable de régulateur stockée dans la mémoire, peut être transmise au dispositif d'entrée par l'intermédiaire de l'agencement d'interfaces, en particulier peut être émise et/ou traitée ultérieurement par le dispositif d'entrée.

3. Agencement d'interfaces selon l'une des revendications précédentes, **caractérisé en ce que** les première et seconde interfaces sont disposées dans un composant (30) et/ou sont conçues comme des modules indépendants et/ou sont conçues pour fonctionner en temps réel.

4. Agencement d'interfaces selon l'une des revendications précédentes, **caractérisé en ce que** la seconde interface présente au moins une fonction critique pour la sécurité et/ou est qualifiée selon les réglementations aéronautiques et/ou la première interface ne présente pas de fonction critique pour la sécurité et/ou n'est pas qualifiée selon les réglementations aéronautiques.

5. Agencement de régulateur de propulseur comportant un régulateur de propulseur (40) pour un propulseur (100), en particulier un propulseur d'aéronef et/ou un propulseur de turbine à gaz, et un agencement d'interfaces (30) selon l'une des revendications précédentes, dont la seconde interface (21) est connectée par signaux pour la communication avec le régulateur de propulseur.

6. Propulseur (100), en particulier propulseur d'aéronef et/ou propulseur de turbine à gaz, comportant un agencement de régulateur de propulseur selon la revendication précédente pour la régulation du propulseur.

7. Propulseur selon la revendication précédente, **caractérisé en ce que** l'agencement d'interfaces est disposé de manière fixe sur le propulseur.

8. Procédé permettant la communication entre le régulateur de propulseur (40) et un dispositif d'entrée (60) par l'intermédiaire d'un agencement d'interfaces (30) selon l'une des revendications précédentes, dans lequel la première interface (11) est connectée par signaux pour la communication avec le dispositif d'entrée (60) et la valeur d'au moins une variable de régulateur, en particulier de la variable de régulateur stockée dans la mémoire, est transmise par l'intermédiaire de l'agencement d'interfaces.
